Europäisches Patentamt

European Patent Office

Office européen des brevets

(11) Numéro de publication: **0 219 393**

**A1**

# (12) DEMANDE DE BREVET EUROPEEN

(21) Numéro de dépôt: **86402035.9**

(22) Date de dépôt: **17.09.86**

(51) Int. Cl.⁴: **B 62 D 55/112**

(30) Priorité: **19.09.85 FR 8513936**

(43) Date de publication de la demande:
**22.04.87 Bulletin 87/17**

(84) Etats contractants désignés: **DE FR GB IT**

(71) Demandeur: **LUCAS FRANCE S.A.**
**11, rue Lord Byron**
**F-75008 Paris (FR)**

(72) Inventeur: **Chauveau, Jean-Marc**
**50, rue du Docteur Darin**
**F-92370 Chaville (FR)**

**Chambon, Claude André**
**6, rue du Houssay**
**f-91460 Marcoussis (FR)**

(74) Mandataire: **Martin, Jean-Jacques et al**
**Cabinet REGIMBEAU 26, Avenue Kléber**
**F-75116 Paris (FR)**

(54) **Organe de suspension pour véhicules, avec réglage de garde au sol.**

(57) La présente invention concerne une suspension pour véhicules, avec correction de garde au sol.

Dans une suspension du type comportant un organe (29, 44) formant un cylindre et un organe (47, 48) formant un piston à l'intérieur du cylindre en délimitant une enceinte étanche (56, 42) avec le cylindre et avec une paroi transversale de fond (64) fermant celui-ci, ladite enceinte (56, 42) est cloisonnée de façon étanche en deux chambres (56, 42 ; 69) dont l'une jouxte longitudinalement le piston (47) et renferme un fluide compressible formant ressort, et dont l'autre jouxte longitudinalement la paroi de fond (64) et contient un fluide sensiblement incompressible ; un passage (68) d'introduction ou de prélèvement à volonté de fluide sensiblement incompressible débouche dans la deuxième chambre (69) dans la zone de la paroi de fond (64) pour autoriser un réglage de garde au sol du véhicule par variation, à volonté, du volume de la seconde chambre (69).

Ainsi, la prévision de moyens de réglage de garde au sol peut être obtenue de façon simple : en outre, les moyens de cloisonnement étanche de l'enceinte délimitée par le piston à l'intérieur du cylindre et le fluide sensiblement incompressible sont protégés des sollicitations du piston par le fluide compressible formant ressort.

FIG. 2

EP 0 219 393 A1

**Description**

## ORGANE DE SUSPENSION POUR VEHICULES, AVEC REGLAGE DE GARDE AU SOL.

La présente invention concerne un organe de suspension pour véhicules, avec réglage de garde au sol.

Plus précisément, la présente invention concerne des perfectionnements aux organes de suspension pour véhicules, du type comportant :

- deux organes montés à coulissement longitudinal relatif, à raison d'un organe formant un cylindre et d'un organe formant un piston à l'intérieur du cylindre en délimitant une enceinte étanche avec le cylindre et avec une paroi transversale de fond, fermant celui-ci.

- des moyens de liaison desdits organes respectivement avec un organe de roulement et avec une ossature du véhicule, pour associer mutuellement des variations de volume de ladite enceinte et des variations de garde au sol du véhicule,

- des moyens de cloisonnement étanche de ladite enceinte en deux chambres dont l'une jouxte longitudinalement le piston et dont l'autre jouxte longitudinalement ladite paroi de fond, les moyens de cloisonnement étant au moins partiellement mobiles par rapport auxdits organes pour autoriser des variations de volume des deux chambres,

- un fluide compressible, formant ressort, dans une première desdites chambres,

- au moins un passage aménagé dans l'organe formant un cylindre, pour introduire ou prélever à volonté du fluide dans la seconde chambre pour faire varier le volume de celle-ci et et modifier la garde au sol du véhicule.

Dans les organes de suspension de ce type actuellement connus, les moyens de cloisonnement étanche sont constitués par un piston auxiliaire monté flottant, à coulissement longitudinal, à l'intérieur du cylindre entre le piston premièrement cité et la paroi transversale de fond du cylindre ; la première chambre, contenant le fluide compressible formant ressort, est située entre ce piston auxiliaire et la paroi transversale de fond du cylindre alors que la seconde chambre, contenant le fluide sensiblement incompressible, est située entre le piston premièrement cité et le piston auxiliaire ; de ce fait, le fluide sensiblement incompressible transmet au piston auxiliaire le mouvement du piston premièrement cité par rapport au cylindre, en traduisant ainsi par une plus ou moins grande compression du fluide compressible la position relative de l'organe formant cylindre et de l'organe formant piston.

On remarque que, dans une telle structure, la seconde chambre, contenant le fluide sensiblement incompressible, est essentiellement mobile longitudinalement par rapport à l'organe formant cylindre puisqu'elle est délimitée, à l'intérieur du cylindre, par deux pistons eux-mêmes mobiles longitudinalement par rapport à la paroi transversale de fond, d'une part en fonction du volume communiqué à la seconde chambre par introduction d'une quantité de fluide sensiblement incompressible plus ou moins grande dans cette chambre pour effectuer un réglage de garde au sol, et d'autre part en fonction de l'état de compression du fluide compressible formant ressort dans la première chambre.

Cette mobilité de la seconde chambre rend particulièrement délicat le choix d'un emplacement pour le passage d'introduction ou de prélèvement à volonté du fluide dans cette chambre, ce qui oblige à avoir recours à des artifices pour que le passage débouche effectivement dans la deuxième chambre quelle que soit la position de celle-ci ; par exemple, on peut faire déboucher le passage dans la seconde chambre, c'est-à- dire entre les deux pistons, en subdivisant l'enceinte en deux tronçons, avantageusement juxtaposés pour des raisons d'encombrement, en plaçant respectivement l'un et l'autre des pistons dans l'un et l'autre des tronçons et en faisant déboucher le passage d'introduction ou de prélèvement de fluide sensiblement incompressible dans un conduit de liaison entre les deux tronçons; cette solution présente l'inconvénient d'un volume nécessairement important de la deuxième chambre, ce qui implique un encombrement et une masse importants de l'organe formant cylindre et l'utilisation d'une quantité importante de fluide sensiblement incompressible ; il en résulte que la prévision d'une possibilité de correction de garde au sol se traduit par une augmentation importante de la masse et du coût de l'organe de suspension, en comparaison avec un tel organe démuni de moyens de réglage d'assiette.

En outre, on remarque que le fluide sensiblement incompressible joue, dans une telle structure connue, un rôle de transmission d'efforts entre le piston premièrement cité, d'une part, et le fluide compressible formant ressort, via le piston auxiliaire, d'autre part, si bien que toutes les sollicitations dynamiques auxquelles peut être soumise la suspension se transmettent intégralement, par le passage d'introduction ou de prélèvement de fluide non compressible, aux moyens prévus à l'extérieur de l'organe de suspension pour introduire ou prélever le fluide sensiblement incompressible ; or, à moins d'un surdimensionnement coûteux, ces moyens ne sont pas susceptibles de résister aux pointes de pression qui peuvent être transmises par le fluide sensiblement incompressible, si bien qu'il est nécessaire de prévoir des moyens de protection contre les surpressions, nécessairement encombrants et coûteux : ainsi, en sa demande de brevet français n° 84 10859 du 9.07.1984, la Demanderesse a décrit un organe de suspension dont le piston auxiliaire présente des dispositions propres à lui permettre d'obturer le passage d'introduction ou de prélèvement à volonté de fluide sensiblement incompressible, si la suspension est sollicitée excessivement en comparaison avec les possibilités de résistance à la pression que offertes par les moyens d'introduction ou de prélèvement de fluide incompressible.

Le but de la présente invention est de remédier à ces inconvénients, et, à cet effet, la présente invention propose une suspension pour véhicules, du type indiqué en préambule, en outre caractérisée en ce que la première chambre, contenant le fluide compressible formant ressort, et la seconde chambre, contenant le fluide sensiblement incompressible, sont respectivement ladite chambre jouxtant le piston premièrement cité et la chambre jouxtant la paroi transversale de fond du cylindre, et en ce que le passage d'introduction ou de prélèvement à volonté de fluide sensiblement incompressible dans la seconde chambre débouche à l'intérieur de cette dernière dans la zone de la paroi de fond du cylindre.

Avantageusement, le passage précité débouche dans la second chambre par la paroi de fond du cylindre.

Ainsi, on est assuré de ce que le passage précité débouche effectivement dans la seconde chambre quel que soit l'état de la suspension ; toute précaution à cet effet devient inutile, ce qui fait disparaître les inconvénients des structures traditionnelles, liés à la nécessité de telles précautions.

En outre, dans une structure conforme à la présente invention, le fluide sensiblement incompressible ne sert plus d'intermédiaire de transmission de sollicitations entre le piston premièrement cité et le fluide compressible formant ressort, lequel protège au contraire le fluide sensiblement incompressible en filtrant la transmission à celui-ci des pointes de pression si bien que l'on peut simplifier les moyens de protection, à l'encontre des surpressions, des moyens prévus pour introduire ou prélever à volonté du fluide sensiblement incompressible dans la seconde chambre ; en outre, les moyens de cloisonnement étanche de l'enceinte en la première et la seconde chambres sont eux-mêmes beaucoup moins sollicités, si bien qu'il est possible de remplacer le piston auxiliaire traditionnel par une membrane étanche, souple, élastiquement extensible, présentant une périphérie sur la totalité de laquelle elle est solidarisée de façon étanche avec l'organe formant cylindre, autour du passage de prélèvement ou d'introduction de fluide sensiblement incompressible dans la seconde chambre ; ceci autorise un allègement et une simplification appréciables de l'organe de suspension ; naturellement, l'utilisation d'un piston auxiliaire reste cependant possible.

De même, pour des raisons d'encombrement, et non plus en fonction d'impératifs liés au souci de faire toujours déboucher dans la seconde chambre le passage d'introduction ou de prélèvement à volonté de fluide sensiblement incompressible dans celle-ci, on peut conserver une disposition coudée de l'enceinte délimitée par le cylindre et le piston premièrement cité , en plaçant ce dernier et les moyens de cloisonnement étanche dans deux tronçons de l'enceinte mutuellement distincts et par exemple juxtaposés, mais en liaison fluidique mutuelle permanente ; une réalisation dans laquelle le piston premiè rement cité, la première chambre, les moyens de cloisonnement, la seconde chambre et la paroi de fond du cylindre sont dans le même alignement longitudinal peut cependant être également adoptée notamment en fonction d'impératifs d'implantation sur un véhicule de type déterminé.

On pourra réaliser conformément à la présente invention soit un organe de suspension formant uniquement ressort, grâce à la présence du fluide compressible dans la première chambre, soit un organe de suspension formant à la fois ressort et amortisseur, en prévoyant en outre des moyens d'amortissement des mouvements de coulissement longitudinal relatif de l'organe formant cylindre et de l'organe formant piston.

D'autres caractéristiques et avantages de l'invention ressortiront à la description ci-dessous, relative à un mode de mise en oeuvre non limitatif, ainsi que des dessins annexés qui font partie intégrante de la description.

La figure 1 montre une vue en perspective d'un organe de suspension réalisé conformément à la présente invention, dans un état d'équilibre statique alors que cet organe est monté sur un véhicule reposant sur un plan horizontal.

La figure 2 montre une vue de cet organe en coupe partielle par un plan longitudinal, repéré en I-I à la figure 3, dans un état d'équilibre dynamique.

La figure 3 montre une vue de l'organe de suspension en coupe par deux demi-plans repérés en III-III à la figure 2.

La figure 4 montre une vue de l'organe de suspension à l'état d'équilibre statique, en coupe partielle par un plan repéré en IV-IV à la figure 3, lequel plan est parallèle au plan repéré en I-I ; la figure 4 illutre en outre schématiquement un circuit hydraulique formant partie des moyens d'amortissement dont est muni l'organe de suspension illustré.

Cet organe, désigné par la référence générale 1 , est illustré dans des positions d'équilibre qu'il est susceptible d'occuper alors qu'il est monté sur un véhicule dont on a schématisé en 2 une ossature, et que ce véhicule repose sur un plan horizontal par l'intermédiaire d'un organe de roulement schématisé en 3, tel qu'une roue ou un galet de chenille, suivant le type de véhicule considéré.

C'est en référence à ces positions et à ces états d'équilibre que l'organe 1 sera décrit, étant bien entendu que toute notion d'horizontalité, de verticalité, de niveau, de sens n'aura aucun caractère limitatif, et devra être interprétée comme une simple indication de positionnement relatif des différents éléments de l'organe de suspension 1.

En vue de son montage sur l'ossature du véhicule, l'organe de suspension 1 qui a été illustré comporte un support 4 se présentant sous la forme d'une plaque verticale 6 qui peut être solidarisée, par exemple par boulonnage 5, avec l'ossature du véhicule et qui porte elle-même de façon solidaire, par exemple d'une seule pièce avec elle, un arbre 7 présentant une direction moyenne 8 horizontale, perpendiculaire à la plaque 4 ; lorsque le support 4 est solidarisé avec l'ossature 2 du véhicule, l'arbre 7 est en saillie à l'extérieur de celui-ci.

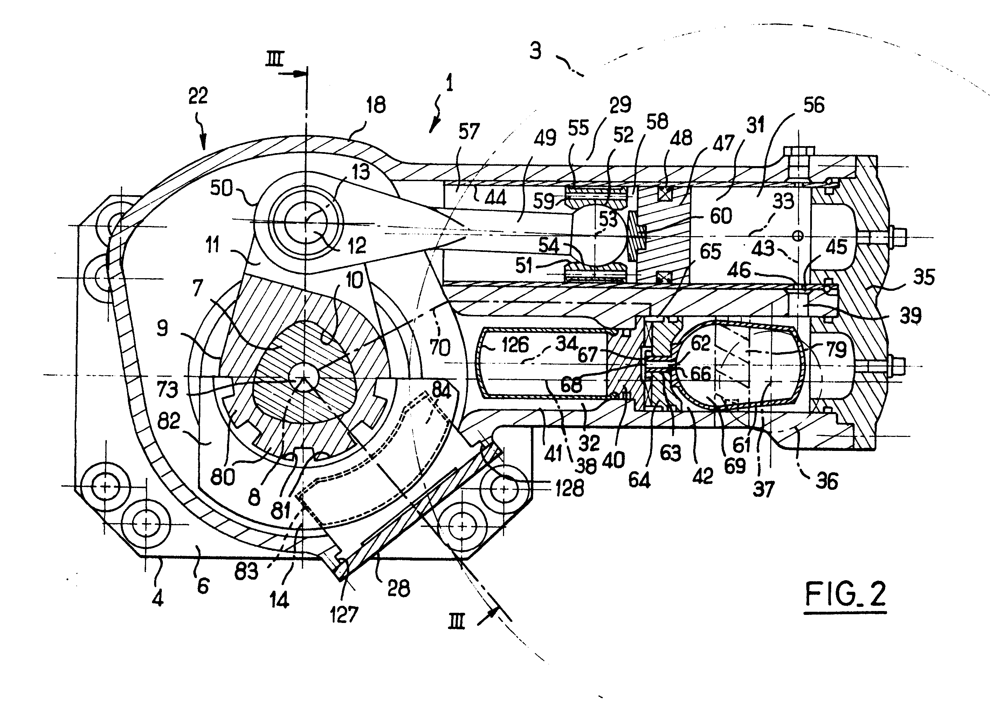

L'arbre 7 porte lui-même de façon solidaire, notamment à l'encontre d'une rotation autour d'un axe défini par sa direction moyenne 8, une manivelle 9 qui coopère à cet effet avec l'arbre 7 par complémentarité de formes ; par exemple, la manivelle 9 présente un alésage 10 par lequel elle s'emboîte sur l'arbre 7 et, transversalement par rapport à l'axe 8, l'alésage 10 et l'arbre 7 présentent des sections respectives polygonales, complémentaires, comme le montre la figure 2; toute autre forme de solidarisation mutuelle de la manivelle 9 et de l'arbre 7 notamment à l'encontre d'une rotation relative autour de l'axe 8 pourrait être utilisée sans que l'on sorte pour autant du cadre de la présente invention ; par exemple, on pourrait utiliser à cet effet un clavetage traditionnel, ou une coopération de l'alésage 10 et de l'arbre 7 par des cannelures complémentaires.

La manivelle 9 forme d'une part, au-dessus de l'arbre 7, une chape 11 portant de façon solidaire un tourillon 12 d'axe 13 situé parallèlement à l'axe 8, au-dessus de celui-ci et dans un même plan vertical 14 que celui-ci ; cet axe 13 est comme l'axe 8 fixe par rapport au support 4 ; d'autre part, respectivement de part et d'autre de la chape 11 selon une direction parallèle à l'axe 8, la manivelle 9 définit de façon solidaire deux manchons 20 et 21 situés respectivement entre la chape 11 et la plaque 6, et à l'opposé de la plaque 6 par rapport à la chape 11 ; chacun des manchons 20 et 21 porte de façon solidaire la cage intérieure d'un roulement de butée respectif 16, 17 présentant par ailleurs une cage extérieure solidaire respectivement d'un boîtier de carter 18 ou d'un flasque de carter 19, l'un et l'autre annulaires et mutuellement solidaires, pour assurer le guidage du boîtier de carter 18 et du flasque de carter 19 à la rotation autour de l'axe 8 par rapport à la manivelle 9 et à l'arbre 7 sans possibilité de translation relative parallèlement à l'axe 8 ; à cet effet, en outre, les cages intérieures des roulements 16 et 17 sont emprisonnées respectivement entre la plaque 6 et la chape 4, et entre la chape 11 et une plaque de butée 93 rapportée de façon solidaire sur l'organe 7, par exemple par boulonnage 92, à l'opposé du raccordement de l'arbre 7 avec la plaque 6.

Le boîtier de carter 18 est étanche et enveloppe la manivelle 9 du côté de la plaque 6 du support 4 et dans le sens d'un éloignement radial par rapport à l'axe 8 ; autour du roulement 16 et du manchon 20, le boîtier de carter 18 présente en saillie vers la plaque 6 une couronne 23 annulaire de révolution autour de l'axe 8, laquelle couronne 23 est engagée, avec possibilité de rotation relative autour de l'axe 8, dans une gorge complémentaire 24 aménagée dans la plaque 6 ; des garnitures d'étanchéité 25, 26 dont le choix et la position sont aisément déterminables par un homme du métier assurent une étanchéité entre la plaque 6, elle-même étanche, et la couronne 23 également étanche.

Le flasque 19, également étanche, est solidarisé de façon étanche avec le boîtier 18 et couvre la manivelle 9 à l'opposé du boîtier 18 ; il présente un orifice de révolution autour de l'axe 8, obturé de façon étanche par un couvercle rapporté 27, en forme générale de disque perpendiculaire à l'axe 8 ; de même , un orifice du boîtier 18 est obturé de façon étanche par un couvercle rapporté 28, si bien que le support 4, le boîtier de carter 18, le flasque de carter 19, le couvercle 27, le couvercle 28 définissent ensemble un carter étanche 22 enfermant notamment la manivelle 9, le tourillon 12 et les deux roulements 16 et 17.

Comme il apparaitra plus loin, le carter 22 contient un fluide hydraulique sensiblement incompressible, en pratique une huile, qui emplit au maximum ce carter 22 pouvant contenir par ailleurs de l'air.

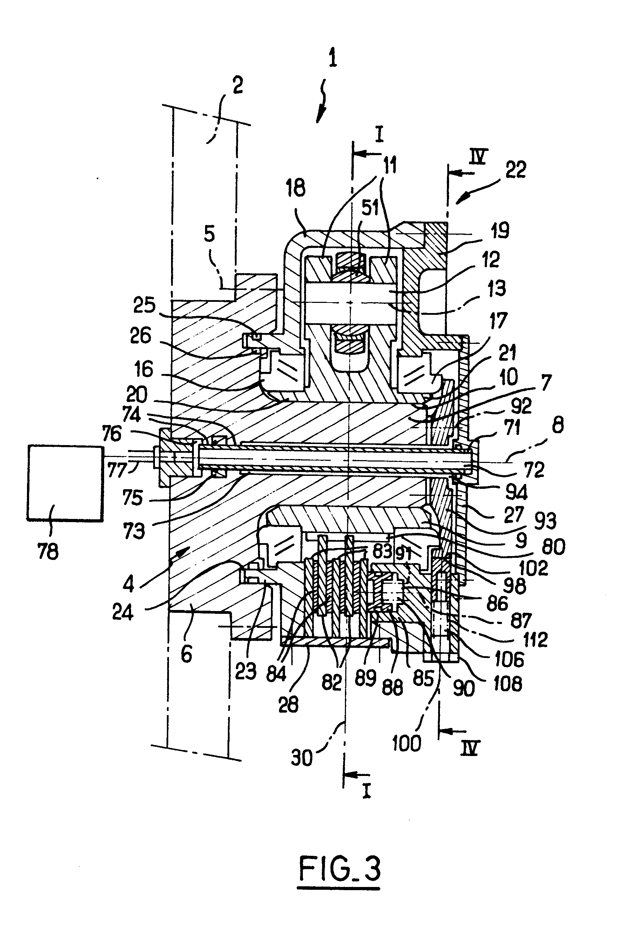

Le boîtier 18 porte de façon solidaire, de préférence en une seule pièce, un bras longitudinal creux 29, en saillie, par rapport au carter 22, suivant un plan moyen 30 perpendiculaire à l'axe 8 et confondu avec le plan de coupe repéré en I-I sur la figure 3.

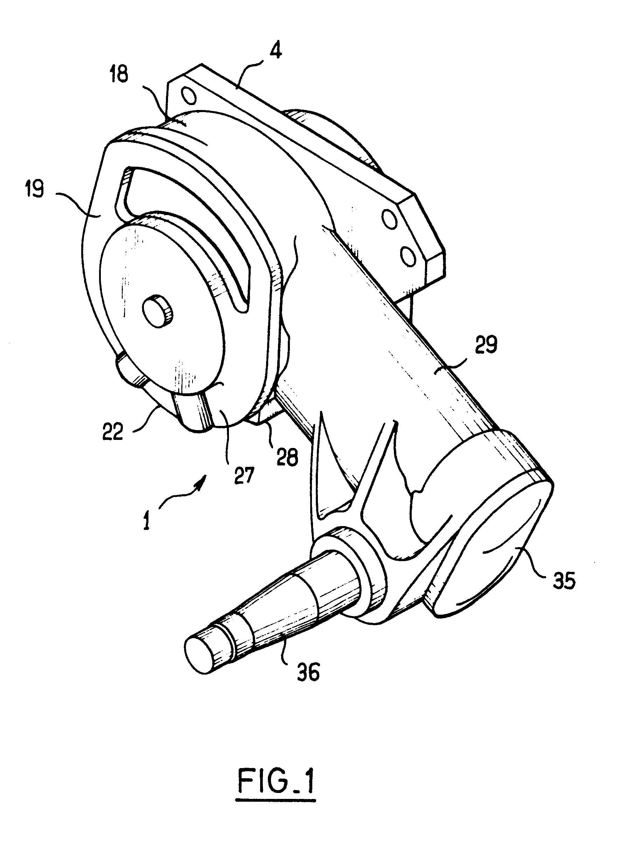

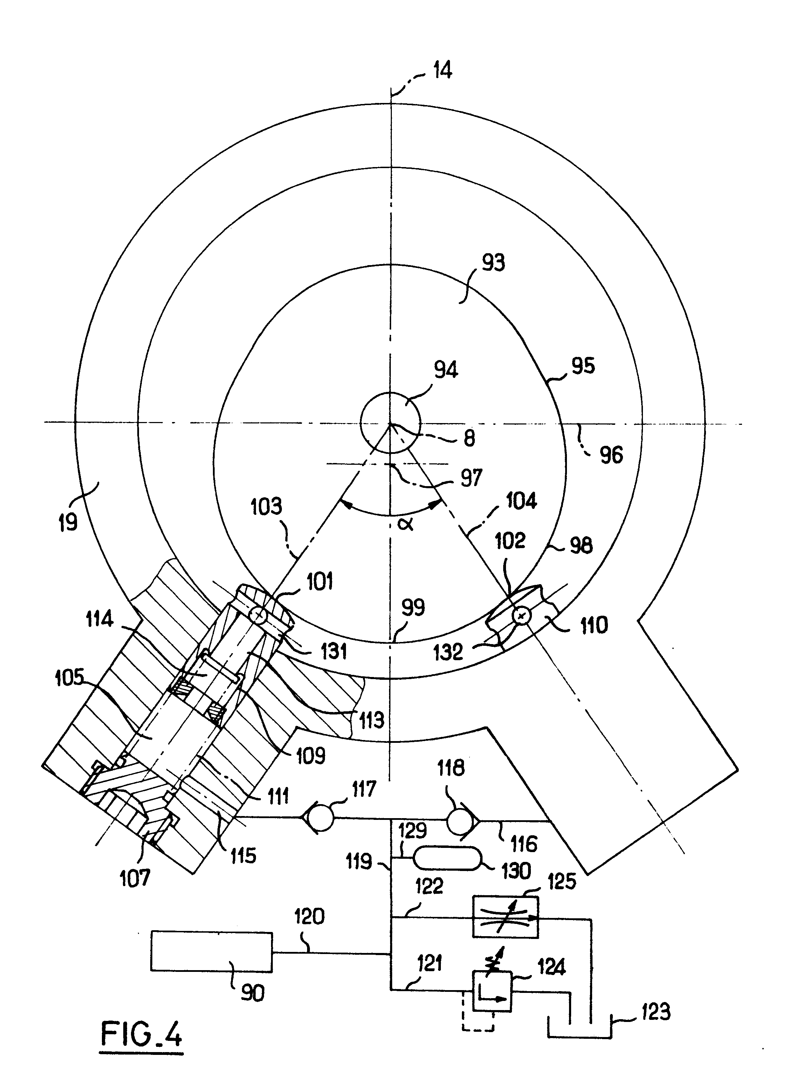

Le bras 29 est illustré dans une orientation horizontale à la figure 2 mais il est bien entendu qu'il peut tourner conjointement avec le carter 22, dont il est solidaire, autour de l'axe 8 par rapport au support 4; ce bras 29 présente une obliquité vers le bas, à partir du carter 22, dans son état illustré aux figures 1 et 4.

Longitudinalement à l'opposé de son raccordement avec le boîtier 18 du carter 22, le bras 29 porte de façon solidaire, avantageusement en une pièce, une fusée 36 de guidage à la rotation par rapport à lui, autour d'un axe 37 parallèle à l'axe 8, de l'organe de roulement 3 ; dans l'etat illustré à la figure 2, un plan 38 commun aux axes 8 et 37 est horizontal mais il peut également être oblique, dès lors que des variations de niveau relatif de l'ossature 2 du véhicule et de l'organe de roulement 3 se traduisent par une rotation du bras 29 autour de l'axe 8 par rapport au support 2.

Le bras 29 est creusé de deux cavités tubulaires 31 et 32 présentant des axes longitudinaux respectifs 33, 34 rectilignes, parallèles l'un par rapport à l'autre ainsi que par rapport au plan 38 et situés dans le plan 30 de telle sorte que la cavité 31 soit placée au-dessus de la cavité 32, que les axes 33 et 34 soient tout deux situés au-dessus du plan 38, et que l'axe 33 de la cavité supérieure 31 coupe le plan 14 à proximité immédiate de l'axe 13, dans l'exemple non limitatif illustré.

A une extrémité transversale, correspondant au raccordement du bras 29 avec le boîtier 18, les cavités 31 et 32 communiquent librement avec l'intérieur du carter 22 alors qu'à leur autre extrémité transversale, constituant la zone du bras 29 la plus éloignée du carter 22, elles sont fermées par un couvercle étanche 35, rapporté de façon solidaire et étanche sur le bras 29 lui-même étanche.

Approximativement à mi-distance de ses deux extrémités transversales, la cavité inférieure 32 est obturée de façon permanente par une cloison 40 étanche, rapportée de façon solidaire sur le bras 29, si bien que la cavité inférieure 32 présente d'une part, à proximité immédiate du boîtier 18, une chambre 41 en communication directe avec l'intérieur du carter 22, et d'autre part, à proximité immédiate du couvercle 35, une chambre 42 qui communique quant à elle en permanence, via un trou 39 de passage de fluide aménagé entre les deux cavités 31 et 32 suivant une direction 43 perpendiculaire aux deux axes 33 et 34, avec la cavité 31.

De préférence. comme il est illustré, cette dernière est garnie intérieurement d'une chemise tubulaire longitudinale 44, d'axe 33, laquelle est percée d'un ou plusieurs orifices 46 en regard du trou 39 et d'une gorge 45, annulaire de révolution autour de l'axe 33, par laquelle le trou 39 débouche dans la cavité 31 à proximité du couvercle 35.

La chemise 44 sert à faciliter le guidage au coulissement longitudinal, à l'intérieur de la cavité tubulaire 31, d'un piston 47 étanche, étanchéifié vis-à-vis de la chemise 44 par des garnitures appropriées 48, lequel piston 47 est relié par une bielle 49 au tourillon 12 porté de façon solidaire par la manivelle 9, de telle sorte que les débattements angulaires du bras 29 autour de l'axe 8 par rapport au support 9 se traduisent par un mouvement de coulissement longitudinal du piston 47, dans un sens ou dans l'autre, à l'intérieur de la cavité 31.

A cet effet, la bielle 49 présente une première extrémité 50 par laquelle elle est articulée sur le tourillon 12, de préférence par l'intermédiaire d'un dispositif à rotule 51, de façon à pouvoir pivoter autour de l'axe 13 par rapport à la manivelle 9 ; la bielle 49 présente par ailleurs une deuxième extrémité 51 disposée à l'intérieur de la cavité 31, et qui présente elle-même la forme d'une rotule sphérique 52 dont le centre 53 est maintenu sur l'axe 33 par engagement de la rotule 52 dans une portée sphérique concentrique 54 d'un coulisseau annulaire 55, de révolution autour de l'axe 33, lequel coulisseau 55 est monté au coulissement longitudinal dans la chemise 44, du même côté du piston 47 que l'axe 13.

Alors que le piston 47 est étanche et étanchéifié vis-à-vis de la chemise 44, pour délimiter de façon étanche dans la cavité tubulaire 31 une chambre 56 située du côté du couvercle 35 et communiquant en permanence avec la chambre 42 de la cavité 32, et une chambre 57 quant à elle située du côté du carter 22 avec lequel elle communique, cette chambre 57 contenant le coulisseau 55 et la rotule 52, le coulisseau 55 est quant à lui conçu pour laisser librement passer le fluide hydraulique contenu dans le carter 22 et dans la chambre 57 vers un espace 58 subsistant entre ce coulisseau 55 et le piston 47 ; à cet effet, par exemple, des passages longitudinaux 59 sont percés dans le coulisseau 55, autour de la portée sphérique 54 ; ainsi, le fluide contenu dans le carter 22 et la chambre 57 peut parvenir à l'espace 58 et lubrifier le coulisseau 55 et le piston 57 à leur contact avec la chemise 44, la rotule 52 à son contact avec la portée sphérique 54, ainsi qu'à son contact avec un tampon 60 rapporté de façon solidaire sur le piston 47, du côté de la chambre 57, pour servir de moyen de butée longitudinale du piston 47 contre la rotule 52, que la forme annulaire du coulisseau 55 laisse totalement dégagée vers le piston 47 ; cette disposition préférée permet d'assurer une transmission aussi directe que possible des efforts longitudinaux entre la bielle 49 et le piston 47 en limitant à un minimum les sollicitations transversales du piston 47 par la bielle 49 ; d'autres dispositions pourraient naturellement être adoptées, comme par exemple une butée du piston 47 non pas contre la bielle 49 mais contre le coulisseau 55 ; le mode de montage de la bielle 49 notamment sur le coulisseau 55 pourrait également être différent, dès lors qu'il définirait au moins un axe de rotation relative parallèle à l'axe 13 et dont la trace dans le plan 50 coïnciderait avec le centre 53 de la rotule 52 et de la portée sphérique 54 de la structure illustrée.

Le piston 47 est sollicité longitudinalement vers le coulisseau 55, de façon à assurer une butée mutuelle du tampon 60 et de la rotule 52 dans l'exemple illustré, par un fluide compressible formant ressort pneumatique, en pratique un gaz. logé dans les chambres communicantes 56 et 42 et agissant directement sur le piston 47 dans la chambre 56 ; le trou 39, la gorge 45 et l'orifice 46 (ou les orifices 46) sont dimensionnés de façon à n'opposer pratiquement aucune entrave au passage de ce fluide de l'une à l'autre des chambres 56 et 42 , c'est-à-dire de façon à ne provoquer aucun laminage de ce fluide lorsque le piston 47 coulisse longitudinalement à l'intérieur de la chemise 44.

Dans la chambre 42, le fluide compressible formant ressort baigne une vessie 61 en matériau souple, étanche,élastiquement extensible, laquelle vessie 61 présente vers la cloison 40, suivant l'axe 34, un orifice 62 avantageusement délimité par un embout 67 formant partie intégrante de la vessie 61 et placé en saillie suivant l'axe 34 vers la cloison 40 ; par sa périphérie 63 radialement extérieure, en référence à l'axe 34, l'embout 67 s'engage dans un alésage 66, d'axe 34, aménagé dans une paroi étanche 64 rapportée de façon solidaire et étanche dans la cavité 32, transversalement à l'axe 34, de façon à doubler la cloison 40 vers la chambre 42 en délimitant avec la cloison 40, dans la cavité 32, un volume intermédiaire 65 étanchéifié aussi bien vis-à-vis de la chambre 41 que du reste de la chambre 42 ; la totalité de la périphérie extérieure 63 de l'embout 67 est en contact étanche avec la paroi 64, ce qui définit à travers celle-ci un passage 68 raccordant l'intérieur de la vessie 61 avec le volume 65 tout en préservant l'étanchéité de ce dernier vis-à-vis de la partie de la chambre 42 extérieure à la vessie 61, c'est-à-dire vis-à-vis du fluide compressible emplissant les chambres 42, à l'extérieur de la vessie 61, et 56 ; le contact étanche entre l'embout 67 et la paroi 64 peut par exemple résulter d'un simple emboîtement de l'embout 67 dans l'alésage 66.

La vessie 61 délimite ainsi intérieurement, à l'intérieur de la chambre 42,une chambre 69 qui est destinée à recevoir, par l'intermédiaire du volume 65, un fluide hydraulique sensiblement incompressible dont le rôle est de réduire le volume disponible, à l'intérieur de la chambre 42, pour le fluide compressible formant ressort et, par une variation du volume de la chambre 69 consécutive à une introduction ou un prélèvement de fluide hydraulique sensiblement non compressible dans cette chambre, d'obliger une quantité plus ou moins grande de fluide compressible à rester dans la chambre 56 pour faire varier la position longitudinale du piston 47 dans la chemise 44 correspondant à l'équilibre entre le poids du véhicule et l'appui de l'organe de roulement au sol, c'est-à-dire, en d'autres termes, de faire varier la garde au sol.

Pour ce faire, des conduits schématisés par un trait mixte 70 sont aménagés à l'intérieur du bras 58. du flasque de carter 19 et du couvercle 27, d'une façon aisément déterminable par un homme du métier, pour relier d'une part le volume 65 intermédiaire entre la cloison 40 et la paroi 64, et d'autre part une chambre 71 aménagée dans le couvercle 67. suivant l'axe 8 comme il ressort à la figure 3 : la chambre 71, placée en regard de l'arbre 7 suivant l'axe 8, loge de façon solidaire du couvercle 27, avec étanchéité mutuelle, une extrémité d'un tube 72 d'axe 8, lequel tube 72 traverse l'arbre 7 jusqu'à la plaque 6, suivant l'axe 8, par un alésage 73 aménagé dans l'arbre 7 avec des dimensions telles qu'il subsiste un jeu périphérique entre le tube 72 et l'arbre 7 : au niveau de la plaque 6, le tube 72 est guidé à la rotation par rapport au support 4, autour de l'axe 8, par un palier 74 muni d'une garniture d'étanchéité tournante 75, et se raccorde à une chambre étanche 76 aménagée dans la plaque 6 et raccordée elle-même, par une conduite 77, à des moyens 78 permettant d'introduire ou de prélever des volumes prédéterminés de fluide sensiblement incompressible ; les moyens 78, connus en eux-mêmes, peuvent comporter par exemple une pompe hydraulique en liaison avec un réservoir de fluide hydraulique, à l'intérieur du véhicule.

Dans une variante de réalisation du dispositif qui vient d'être décrit, la vessie 61 pourrait être supprimée et remplacée par un piston 79, schématisé en traits mixtes à la figure 2, lequel serait monté à coulissement longitudinal dans la chambre 42 pour subdiviser celle-ci de façon étanche, entre une partie de chambre en communication directe avec la chambre 56 par le trou 39, et en une partie de chambre, correspondant à la chambre 69, en liaison fluidique avec le volume 65 par l'alésage 70 de la paroi 64.

En outre, de façon non illustrée et si les conditions d'implantation de la suspension 1 s'y prêtaient les chambres 56 et 42 raccordées par le trou 39 dans l'exemple illustré pourraient être placées dans des alignements respectifs non parallèles entre eux et/ou par rapport au plan 38, suivant le plan 30 ou de façon décalée par rapport à celui-ci ; on pourrait notamment disposer les chambres 56 et 42 dans un même alignement longitudinal, par exemple défini par l'axe 33, auquel cas se succéderaient dans ce même alignement le piston 47, les chambres 56 et 42 confondues, la vessie 61 ou le piston 79, la chambre 69 et la paroi 64 qui pourrait alors être définie par un couvercle se substituant au couvercle 35 ; une telle variante n'a pas été illustrée, mais sa réalisation à partir du mode de mise en oeuvre illustré et décrit précédemment est du domaine des aptitudes normales de l'homme du métier.

Le dispositif qui vient d'être décrit constitue un ressort pneumatique avec possibilité de réglage de garde au sol, et peut être utilisé en tant que tel sur un véhicule.

Il peut cependant également être muni de moyens d'amortissement des mouvements de rotation du bras 29 autour de l'axe 8 par rapport au support 4.

Ces moyens d'amortissement sont ici constitués par les moyens de freinage agissant, avec un effort de freinage asservi à la vitesse de rotation du bras 29 par rapport au support 4, entre des organes solidaires respectivement du bras 29 et du support 4, à l'encontre d'une rotation relative autour de l'axe 8.

A cet effet, dans l'exemple illustré, la manivelle 9 porte vers le bas, c'est-à-dire à l'opposé de la chape 11, une pluralité de nervures en queue d'aronde 80 parallèles à l'axe 8 et recevant, avec possibilité de coulissement relatif parallèlement à cet axe, mais sans possibilité de rotation relative autour de cet axe, des rainures de forme complémentaire 81 aménagées dans des secteurs 82 de disques de freinage, lesquels secteurs 82 sont juxtaposés le long de l'axe 8 perpendiculairement auquel ils présentent des plans moyens respectifs; les secteurs de disques de freinage 82 sont au nombre de deux dans l'exemple illustré, mais un seul de ces secteurs pourrait être prévu de même que l'on pourrait en prévoir plus de deux.

Naturellement, comme la manivelle 9, les secteurs de disques de freinage 82 sont disposés à l'intérieur du carter 22, entre le boîtier de carter 18 et le flasque de carter 19.

Complémentairement, le boîtier de carter 22 porte de façon solidaire, par l'intermédiaire du couvercle 28 localisé dans le dièdre défini par les plans 38 et 14, sous le plan 38 et du même côté du plan 14 que le bras 29, une pluralité de lames 83 présentant des plans moyens respectifs perpendiculaires à l'axe 8, le nombre et la disposition de ces lames 83 étant tels que chaque secteur de disque 82 soit interposé entre deux de ces lames ; en d'autres termes, dans l'exemple illustré, trois de ces lames 83 sont ainsi prévues, dont l'une est intercalée entre les deux secteurs de disques 82 alors que les deux autres sont placées respectivement de part et d'autre de l'ensemble ainsi formé par les deux secteurs de disques 82 et par la lame intermédiaire 83.

Chacune des lames 83 extrêmes porte une garniture de freinage 84 de type connu, vers le disque immédiatement voisin, alors que la lame 83 intermédiaire entre deux secteurs de disques 82, ou chaque lame de ce type, porte de part et d'autre une garniture de freinage 84.

Pour assurer une mise en contact, sous une pression réglée, des garnitures de freinage 84 et des secteurs de freinage 82, dont on remarquera qu'ils présentent autour de l'axe 8 un développement angulaire tel qu'un contact avec les garnitures de freinage 84 puisse s'établir dans toutes positions relatives du bras 29 et du support 4 par rotation relative autour de l'axe 8 dans des limites normales d'utilisation, les lames 83 coopèrent par conjugaison de forme avec des gorges 127, 128 parallèles à l'axe 8 et définies conjointement par le couvercle 28 et le boîtier de carter 18 ; ces gorges 127,128 guident les lames 83 au coulissement suivant une direction parallèle à l'axe 8; alors que celle de ces lames 83 qui est la plus proche de la plaque 6 du support 4 s'appuie contre le boîtier 18 parallèlement à l'axe 8, celle de ces lames 83 qui est la plus éloignée du support 4. c'est-à-dire la plus proche du flasque 19, est sollicitée par un vérin hydraulique de poussée 85. susceptible d'appliquer à cette lame 83 et. par l'intermédiaire de celle-ci, à l'ensemble des secteurs de disques 82 via les garnitures 84, un effort de pression mutuelle de valeur prédéterminée parallèlement à l'axe 8.

A cet effet, le flasque 19 présente vers le support 4, c'est-à-dire vers l'intérieur du carter 22, au moins un trou borgne 86 d'axe 87 parallèle à l'axe 8, en regard de la plaque 83 la plus proche du flasque 19, et ce trou borgne constitue un cylindre dans lequel peut évoluer, suivant l'axe 87, un piston 88 étanchéifié vis-à-vis du trou borgne 86 par une garniture d'étanchéité 89 pour délimiter à l'intérieur du trou borgne 86 une chambre étanche 90 ; dans cette chambre 90, est avantageusement logé un ressort hélicoïdal de compression 91 schématisé par des traits mixtes, lequel ressort 91 assure une pression minimale de contact entre les garnitures de freinage 84 et les secteurs de disque 82 même en l'absence de tout fluide sous pression à l'intérieur de la chambre 90.

Cependant, cette chambre 90 enferme également un tel fluide, dont on fait varier la pression en fonction de la vitesse de rotation du bras 29 par rapport au support 4 autour de l'axe 8, en fonction de lois d'évolution prédéterminées dont certains exemples, non limitatifs, seront décrits plus loin.

En vue de réaliser cet asservissement dans le cas du mode de mise en oeuvre de l'invention illustré aux figures 3 et 4, l'arbre 7 porte de façon solidaire, par exemple par boulonnage 92, à l'intérieur du carter 22 et directement en regard du couvercle 27, une came présentant un plan moyen 100 perpendiculaire à l'axe 8 et avantageusement constituée, dans l'exemple illustré, par la plaque de butée 93 rapportée de façon solidaire sur l'arbre 7 ; cette came est plus particulièrement visible à la figure 4.

Suivant l'axe 8, la came 93 est percée de part en part d'un alésage 94 autorisant le passage du tube 72 avec un jeu comparable à celui qu'autorise l'alésage 73; dans le sens d'un éloignement radial par rapport à l'axe 8 et dans un quelconque plan de coupe perpendiculaire à cet axe, elle présente une périphérie extérieure 95 de forme ovoïde.

Au-dessus d'un plan horizontal 96 incluant l'axe 8 et fixe par rapport au support 4, la forme de cette périphérie est indifférente pourvu que la came 93 joue le rôle de plaque-butée décrit précédemment ; en-dessous du plan 96, elle présente une forme circulaire d'axe 97 parallèle à l'axe 8 et situé dans le plan 14 sous l'axe 8, pour définir un chemin de came 98 présentant sous l'axe 8, dans le plan 14, un point 99 qui constitue le point du chemin de came 98 le plus éloigné de l'axe 8, avec une décroissance progressive de l'éloignement par rapport à l'axe 8 pour des points du chemin de came 98 de plus en plus éloignés du point 99, dans un sens de parcours du chemin 98 par rotation autour de l'axe 8, ou dans le sens de parcours opposé.

Suivant le plan moyen 100 de la came 93, considéré comme le plan moyen de son chemin de came 98 et confondu avec le plan de coupe repéré en IV-IV à la figure 3, le flasque de carter 19 présente en regard du chemin de came 98 deux toucheaux de came 101 et 102 dont chacun est solidaire du flasque 19 à la rotation autour de l'axe 8 mais peut coulisser par rapport au flasque de carter 19, radialement en référence à l'axe 8, de façon à pouvoir rester au contact du chemin de came 98 quelle que soit la position angulaire du bras 29 par rapport au support 4.

4. autour de l'axe 8, dans des limites normales de fonctionnement.

A cet effet, le flasque de carter 19 est percé, suivant des axes respectifs 103 et 104 radiaux par rapport à l'axe 8 et situés dans le plan 100, de deux alésages 105 et 106 dont chacun débouche dans le carter 12, vers le chemin de came 98, en étant obturé à l'opposé par un bouchon respectif 107,108; les axes 103 et 104 sont disposés symétriquement l'un de l'autre par rapport à un plan qui se confond avec le plan vertical 14 dans l'état d'équilibre statique illustré aux figures 1 et 4, avec un décalage angulaire mutuel $\alpha$ des axes 103 et 104 par rapport à l'axe 8;ce décalage angulaire $\alpha$ est au moins égal au débattement angulaire du bras 29 par rapport au support 4,autour de l'axe 8, dans les conditions normales d'utilisation; ce décalage est de l'ordre de 70° dans l'exemple illustré ; naturellement, ce chiffre n'est donné qu'à titre d'exemple non limitatif.

A l'intérieur de chacun des alésages 105 et 106, est monté, à coulissement suivant l'axe 103,104 de cet alésage, un piston respectif 109, 110 qu'un ressort hélicoïdal de compression respectif 111,112, interposé entre ce piston et le bouchon obturant l'alésage correspondant, sollicite élastiquement vers l'axe 8, de telle sorte que chacun des pistons109, 110 forme une saillie hors de l'alésage correspondant 105, 106 à l'intérieur du carter 22, et s'appuie contre le chemin de came 98 par une surface d'extrémité transversale par rapport à l'axe de l'alésage correspondant, laquelle surface définit le toucheau de came 101, 102.

On conçoit qu'ainsi, une rotation du bras 29 et avec lui des axes 103 et 104 autour de l'axe 8 par rapport au support 4 et à la came 93 provoque des mouvements de va et vient alternatifs des deux pistons 109 et 110 dans les alésages respectifs 105, 106 suivant les axes 103, 104 de ces alésages ; la came est conformée, en fonction des positions relatives des axes 103 et 104,de telle sorte qu'un mouvement du bras 29 à la rotation par rapport au support 4 à partir de l'état d'équilibre statique se traduise, quels que soient le sens et l'amplitude de ce mouvement dans les limites normales d'utilisation, par des mouvements en opposition des pistons 109,110 dans les alésages 105, 106; ainsi, dans l'exemple illustré où les axes 103 et 104 sont décalés mu tuellement de 70°, où le chemin de came 98 présente un développement angulaire d'au moins 180 (soit au moins 2 $\alpha$), en référence à l'axe 97, avec répartition symétrique de part et d'autre du plan 14 et si l'on suppose que le débattement du bras 29 à la rotation de l'axe 8 par rapport au support 4, à partir d'une position du plan 38 correspondant à l'équilibre statique, est limité à un maximum de 35° (soit $\alpha/2$) vers le haut comme vers le bas, la rotation du bras 20 vers le haut à partir de l'équilibre statique se traduit par :
- un éloignement. vis-à-vis du point 99, du point de contact, avec le chemin de came 98, du toucheau 102 défini par le piston 110 logé dans l'alésage 106 situé du même côté du plan 14 que le bras 29 lorsque le plan 38 est horizontal, c'est-à-dire par une sortie du piston 110,
- un rapprochement vis-à-vis du point 99 du point de contact, avec le chemin de came 98, du toucheau de came 101 défini par le piston 109 correspondant à l'alésage 105 situé de l'autre côté du plan 14 lorsque le plan 38 est horizontal, c'est-à-dire par une rentrée du piston 109 dans l'alésage 105.

Une rotation en sens inverse produit un effet inverse.

On remarquera que d'autres orientations respectives du chemin de came 98 et des alésages de réception des pistons 109 et 110 pourraient être choisies sans que l'on sorte pour autant du cadre de la présente invention, dès lors que l'on obtiendrait en effet de déplacement des pistons en opposition de phase lors de la rotation du bras dans un sens ou dans l'autre.

Cet effet est utilisé pour produire un pompage de fluide hydraulique à l'intérieur du carter 22 et établir, au moyen de ce fluide hydraulique, une pression dans la chambre 90 de sollicitation du piston de freinage 88.

A cet effet, comme il ressort plus particulièrement de l'examen du piston 109 illustré à la figure 4,étant entendu que le piston 110 est en tout point identique au piston 109,chacun des pistons 109 et 110 est creux et présente à proximité immédiate du toucheau de came correspondant 101, 102 un réseau de canaux 131, 132 placé de telle sorte que ces canaux débouchent en permanence à l'intérieur du carter 22 quel que soit le point du chemin de came 98 avec lequel s'établit le contact du toucheau de came 101, 102 dans les limites normales d'utilisation de l'organe de suspension ; à l'intérieur du piston respectivement correspondant, chacun des réseaux de canaux 131, 132 débouche dans un canal axial tel que 113 muni d'un clapet anti-retour tel que 114 de structure connue, autorisant un passage de fluide des canaux tels que 131 vers l'intérieur de l'alésage tel que 105 via le canal tel que 113, en interdisant un passage en sens inverse ; ainsi, un mouvement de sortie du piston se traduit par l'introduction, dans l'alésage tel que 105, de fluide en provenance du carter 22 alors qu'un mouvement de rentrée du piston dans l'alésage provoque un refoulement du fluide ainsi introduit, ce refoulement s'effectuant par l'intermédiaire d'un conduit tel que 115, aménagé dans l'alésage tel que 105 à proximité immédiate du bouchon tel que 107 d'obturation de cet alésage.

Le conduit 115 et son homologue 116 correspondant à l'alésage 106 comportent un clapet anti-retour respectif 117, 118 de type connu, autorisant le passage de fluide dans le sens d'un refoulement hors de l'alésage 105, 106 en interdisant un passage en sens inverse, et les deux conduits 115 et 116 se réunissent, en aval des clapets antiretour 117 et 118 en référence au sens du passage autorisé, en un conduit unique 119 dont dérivent d'une part un conduit 120 de raccordement à la chambre 90, et d'autre part deux conduits 121 et 122 conduisant en parallèle à un réservoir de fluide hydraulique 123 qui peut être constitué par le carter 22 lui-même.

Le conduit 121 comporte en série un clapet de surpression 124, réglable, alors que le conduit 122 comporte un étranglement réglable 125 permettant d'établir à travers lui un débit de fuite réglable : l'étranglement 125 peut être avantageusement piloté en fonction des pressions respectivement en aval et en amont dans le conduit 122 afin de supprimer l'influence de la viscosité du fluide, c'est-à-dire de la température, sur ce débit de fuite.

Ainsi. lorsque le bras 29 tourne dans un sens ou dans l'autre autour de l'axe 8 par rapport au support 4, l'un ou l'autre des pistons 109, 110 provoque une alimentation du conduit 119 en fluide hydraulique en provenance du carter 22. avec un débit fonction de la vitesse de déplacement du piston dans son alésage, c'est-à-dire de la vitesse de rotation du bras par rapport au support.

Ce débit, en passant par l'étranglement 125, produit une pression qui est fonction de la perte de charge dans ledit étranglement et qui s'établit uniformément dans les conduits 119,120,121,122 et par conséquent dans la chambre 90, ce qui applique au garnitures de freinage 84 et secteurs de disque de freinage 82 un effort de contact mutuel directement fonction de la pression régnant dans le conduit 119 ; de cet effort de contact mutuel résulte, par friction entre les garnitures de freinage 84 et les secteurs de disque de freinage 82, un effort d'amortissement présentant par rapport à l'axe 8 un moment d'amortissement freinant la rotation du bras 29 dans le sens considéré, et ceci d'autant plus que la vitesse de cette rotation est élevée ; la perte de charge dans l'étranglement 125 suit une loi sensiblement parabolique de telle sorte que des mouvements de faible amplitude des pistons 109 et 110 dans leurs alésages respectifs restent sans effet sur le piston 88, c'est-à-dire sur l'effort d'amortissement procuré par le contact sous pression entre les garnitures de freinage 84 et les secteurs de freinage 83.

Tant que la pression dans les conduits 119,120,121,122 reste inférieure à la pression d'ouverture du clapet de surpression 124, le débit de fluide est acheminé en totalité via le conduit 122 et l'étranglement 125 au réservoir 123.

Si la vitesse de rotation du bras 29 autour de l'axe 8 par rapport au support 4 est suffisamment élevée pour que s'établisse dans le conduit 119, du fait du refoulement de fluide par l'un ou l'autre des pistons 109 et 110 en fonction du sens de rotation, une pression excédant le seuil d'ouverture du clapet de surpression 124. lequel seuil est établi en fonction d'un effort maximal d'amortissement désiré, le fluide s'écoule via les conduits 121 et 122 vers le réservoir 123 ; la pression dans les conduits 119,120,121,122 reste alors constante et égale à la pression d'ouverture du clapet de surpression 124 ; l'effort d'amortissement reste alors lui-même constant et présente une valeur constituant son maximum.

On remarquera que l'effort d'amortissement, sensiblement proportionnel à la pression régnant dans la chambre 90,elle-même fonction de la perte de charge créée en 125 par le débit de fluide dans le conduit 122. tend à s'annuler si ce débit s'annule, c'est-à-dire notamment lorsque le bras 29 s'immobilise par rapport au support 4 entre une course de rotation dans un sens et une course de rotation dans l'autre sens puisque les deux pistons 109 et 110 sont alors immobiles : pour maintenir un débit résiduel au travers de l'étranglement 125 dans le conduit 122, c'est-à-dire empêcher une annulation presque totale de l'effort d'amortissement, lors des phases transitoires d'inversion de sens de rotation du bras 29 autour de l'axe 8 par rapport au support 4, on prévoit de préférence un accumulateur de pression 130 raccordé au conduit 119 par un conduit 129 ; cet accumulateur de pression 130 est calculé pour n'avoir qu'un effet négligeable sur la pression dans la chambre 90 lorsque le bras 29 tourne autour de l'axe 8 par rapport au support 4, en ne jouant alors éventuellement qu'un rôle de filtre réduisant les effets de variations du débit dues à des mouvements des pistons 109 et 110 à fréquence élevée dans leurs alésages respectifs.

On remarquera qu'en faisant varier la pente du chemin de came 98, c'est-à-dire en donnant des valeurs différentes à l'angle que forment les tangentes à ce chemin de came 98 en différents points, par rapport à des rayons joignant respectivement ces points à l'axe 8, on peut obtenir non seulement un asservissement de l'effort d'application des garnitures de freinage 85 sur les secteurs de disque de freinage 82 à la vitesse de rotation du bras 29 autour de l'axe 8 par rapport au support 4, mais également à la position angulaire du bras 29 par rapport au support 4 lors de cette rotation, par exemple pour augmenter l'amortissement et durcir ainsi la suspension lorsque le bras approche des amplitudes limites admissibles, en utilisation normale, par rapport à une position moyenne par exemple définie par une horizontalité du plan 38.

En outre, contrairement à ce qui a été décrit et représenté, on peut donner au chemin de came 98 une forme dissymétrique par rapport au plan 14 avec lequel se confond le plan de symétrie entre les axes respectifs 103, 104 des alésages 105, 106 lorsque le bras 29 occupe sa position d'équilibre statique et/ou différencier les sections respectives des pistons 109 et 110, de façon à différencier l'effort d'amortissement en fonction du sens de rotation du bras 29 par rapport au support 4.

On remarquera qu'en disposant les secteurs de disques de freinage 82 et les garnitures 84 à la partie inférieure du carter 22, on est assuré de ce qu'ils baignent en permanence dans le fluide hydraulique placé dans ce carter 22.

Ainsi, ces éléments sont lubrifiés et refroidis en permanence.

Pour assurer un tel effet également au niveau du coulisseau 55 et du piston 47 ainsi qu'au niveau du tourillon 12, des moyens peuvent être avantageusement prévus pour assurer que, en dépit des prélèvements momentanés du fluide hydraulique dans le carter et du mouvement du piston 47 dans la chemise 44, et quelle que soit par ailleurs la température à laquelle est porté ce fluide, le carter 22 soit rempli au maximum de fluide hydraulique au moins dans certaines positions angulaires du bras par rapport au support, dans les conditions normales d'utilisation.

A cet effet, à l'intérieur du carter 22 est avantageusement prévue une vessie 126 en matériau souple, étanche, élastiquement extensible, laquelle vessie contient un gaz sous pression qui, comme le fluide compressible logé dans les chambres 56 et 42, peut avantageusement être constitué par de l'azote ; de façon particulièrement avantageuse, on a placé cette vessie dans la chambre 41 délimitée, à l'intérieur de la cavité 32, par la cloison 40, si bien qu'en raison d'un tel positionnement, les variations de volume de la vessie 126 provoquent à proximité immédiate des garnitures de freinage 84 et secteurs de disques de freinage 82 une circulation du fluide hydraulique du carter 22.

Dans d'autres modes de réalisation, la vessie 126 pourrait être complétée ou remplacée par des moyens accumulateurs de même fonction, disposés de façon appropriée.

Naturellement, les modes de mise en oeuvre de l'invention qui viennent d'être décrits ne constituent que des exemples non limitatifs, et l'on pourra prévoir de nombreuses variantes aux dispositions qui viennent d'être décrites, sans sortir pour autant du cadre de la présente invention.

**Revendications**

1. Suspension pour véhicule, du type comportant :

- deux organes (29, 47) montés à coulissement longitudinal relatif, à raison d'un organe (29) formant un cylindre (44) et d'un organe (47) formant un piston (47) à l'intérieur du cylindre (44) en délimitant une enceinte étanche (42, 56) avec le cylindre (44) et avec une paroi transversale de fond (64) de l'organe formant cylindre (44),

- des moyens de liaison desdits organes (29, 47) respectivement avec un organe de roulement (3) et avec une ossature (2) du véhicule, pour associer mutuellement des variations de volume de ladite enceinte (42, 56) et des variations de garde au sol du véhicule,

- des moyens (61, 79) de cloisonnement étanche de ladite enceinte (42, 56) en deux chambres (42, 56 ; 69) dont l'une jouxte longitudinalement le piston (47) et dont l'autre jouxte longitudinalement ladite paroi de fond (64), les moyens de cloisonnement (61, 79) étant au moins partiellement mobiles par rapport auxdits organes (29, 47) pour autoriser des variations de volume des deux chambres (42, 56 ; 69),

- un fluide compressible, formant ressort, dans une première (42, 56) desdites chambres (42, 56 ; 69),

- un fluide sensiblement incompressible dans la seconde (69) desdites chambres (42, 56 ; 69),

- au moins un passage (68) aménagé dans l'organe (29) formant un cylindre (44), pour introduire ou prélever à volonté du fluide dans la seconde chambre (69) pour faire varier le volume de celle-ci et modifier la garde au sol du véhicule,

caractérisee en ce que lesdites première (42, 56) et seconde (69) chambres sont respectivement la chambre (42, 56) jouxtant le piston (47) et la chambre (69) jouxtant la paroi de fond (64), et en ce que ledit passage (68) débouche dans la seconde chambre (69) dans la zone de la paroi de fond (64).

2. Suspension pour véhicule selon la revendication 1, caractérisée en ce que ledit passage (68) débouche dans la seconde chambre (69) par la paroi de fond (64).

3. Suspension pour véhicule selon l'une quelconque des revendications 1 et 2, caractérisée en ce que le piston (47), la première chambre (42, 56), les moyens de cloisonnement (61, 79), la seconde chambre (69) et la paroi de fond (64) sont juxtaposés suivant un même alignement longitudinal (33).

4. Suspension pour véhicule selon l'une quelconque des revendications 1 et 2, caractérisée en ce que la paroi de fond (64), la deuxième chambre (69), les moyens de cloisonnement (61) et une partie (42) de la première chambre sont juxtaposés suivant un premier alignement longitudinal (34) et en ce que le piston (47) et une autre partie (56) de la première chambre sont juxtaposés suivant un second alignement longitudinal (33), différent du premier (34), lesdites parties (42, 56) de la première chambre étant en liaison fluidique mutuelle permanente.

5. Suspension pour véhicule selon la revendication 4, caractérisée en ce que lesdits alignements longitudinaux (33, 34) sont parallèles.

6. Suspension pour véhicule selon l'une quelconque des revendications 1 à 5, caractérisée en ce que les moyens de cloisonnement (61, 79) comportent une membrane (61) étanche, souple, élastiquement extensible, présentant une périphérie (63) sur la totalité de laquelle elle est solidarisée de façon étanche avec l'organe (29) formant cylindre (44), autour dudit passage (68).

7. Suspension pour véhicule selon l'une quelconque des revendications 1 à 5, caractérisée en ce que les moyens de cloisonnement (61, 79) comportent un piston auxiliaire étanche (79) monté à coulissement longitudinal par rapport aux deux organes, et l'intérieur du cylindre.

8. Suspension pour véhicule selon l'une quelconque des revendications 1 à 7, caractérisée en ce qu'elle comporte en outre des moyens (80 à 125) d'amortissement des mouvements de coulissement longitudinal relatif des deux organes (29, 47).

FIG.1

FIG.2

FIG_3

0219393

0 2 1 9 3 9 3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 552 513  (N.H.K.) <br> * Figure 14; résumé * | 1-7 | B 62 D  55/112 |
| A | FR-A-2 313 605  (RHEINSTAHL) <br> * En entier * | 1-7 | |
| A | US-A-3 459 439  (SINCLAIR et al.) <br> * En entier * | 1 | |
| A | US-A-4 156 536  (BRANDSTADTER) <br> * En entier * | 1 | |
| A | EP-A-0 137 446  (EX-CELL-O) <br> * En entier * | 1 | |
| A | SOLDAT UND TECHNIK, vol. 28, no. 2, 28 février 1985, pages 86-91, Frankfurt, DE; E. DROSEN: "Gleiskettenfahrzeuge für den Einsatz auf dem Gefechtsfeld" <br> * Page 90, colonne de droite, lignes 14-17; figure 14 * | 1,8 | |

DOMAINES TECHNIQUES RECHERCHES (Int. Cl.4)

B 62 D
B 60 G
F 16 F

Le présent rapport de recherche a été établi pour toutes les revendications

| Lieu de la recherche | Date d'achèvement de la recherche | Examinateur |
|---|---|---|
| LA HAYE | 12-12-1986 | LINTZ C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82